# FASCICULE DE BREVET EUROPEEN

(11) **EP 1 351 371 B1**
(45) Date de publication et mention de la délivrance du brevet: **02.08.2006**
(21) Numéro de dépôt: 03290749.5
(22) Date de dépôt: 25.03.2003
(51) Int. Cl.: H02K 9/04, H02K 5/15

(54) **Machine électrique tournante à ventilation forcée**
Drehende elektrische Maschine mit Zwangsbelüftung
Rotating electrical machine with forced ventilation

(30) Priorité: 03.04.2002 FR 0204138
(43) Date de publication de la demande: 08.10.2003
(73) Titulaire: MOTEURS LEROY-SOMER, 16000 Angouleme (FR)
(72) Inventeur: Ciciliani, Philippe, 25700 Valentigney (FR); Lhote, Arnaud, 25460 Etupes (FR); Duong, Hong-Hai, 90100 Joncherey (FR)
(74) Mandataire: Tanty, François

(56) Documents cités:
- EP-A- 1 005 139
- DE-A- 2 928 027
- DE-A- 4 337 463
- GB-A- 2 331 859
- US-A- 3 783 318
- US-A- 4 399 382
- US-A- 5 062 330
- HARTMANN W ET AL: "UNIVERSELLES BELUEFTUNGSSYSTEM FUER DIE NEUE GENERATION VEM-DREHSTROM-HAUPTANTRIEBE" ELEKTRIE, VEB VERLAG TECHNIK. BERLIN, DD, vol. 47, no. 12, 1993, pages 465-469, XP000435438 ISSN: 0013-5399

## Description

La présente invention concerne les machines électriques à ventilation forcée comportant un stator comprenant des ailettes de refroidissement et utilisant un ventilateur pour générer un courant d'air sur les ailettes afin de permettre l'évacuation de la chaleur dégagée par le fonctionnement de la machine.

On connaît par US 4399382 une machine électrique à ventilation forcée, comportant un rotor pouvant tourner autour d'un axe de rotation, un stator à l'intérieur duquel le rotor peut tourner, ce stator comprenant un empilage de tôles présentant des encoches logeant des bobinages, et un ventilateur pouvant tourner indépendamment du rotor, les tôles étant configurées pour former des canaux de refroidissement dans lesquels un courant d'air de refroidissement généré par le ventilateur peut circuler et l'empilage étant disposé entre deux entretoises, les entretoises comportant un corps généralement tubulaire dont une extrémité est adjacente à l'une des extrémités de l'empilage, la machine comportant aussi un capot.

On connaît par JP 610422 64 un moteur linéaire comportant des ailettes de cuivre ou d'aluminium pour dissiper la chaleur.

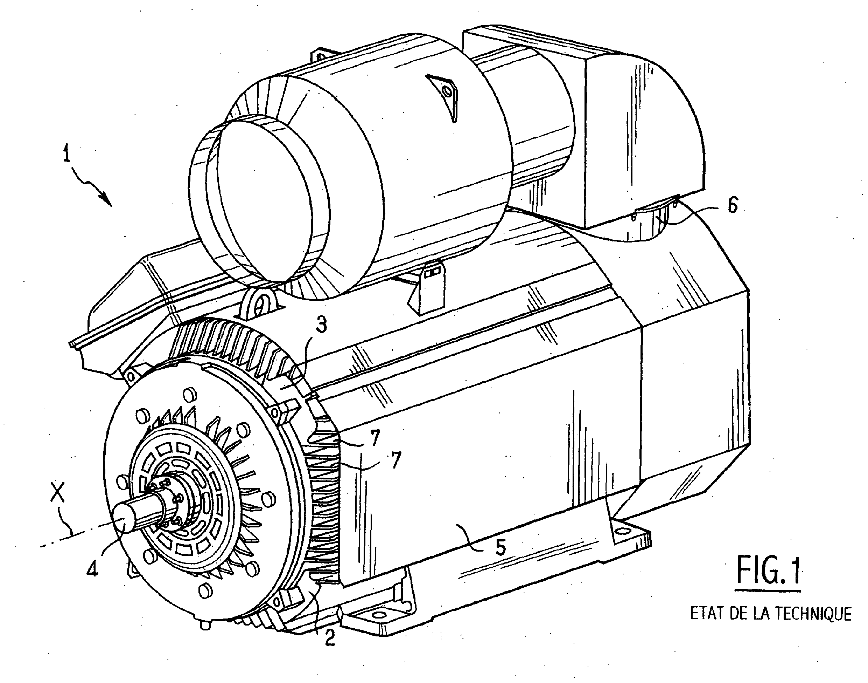

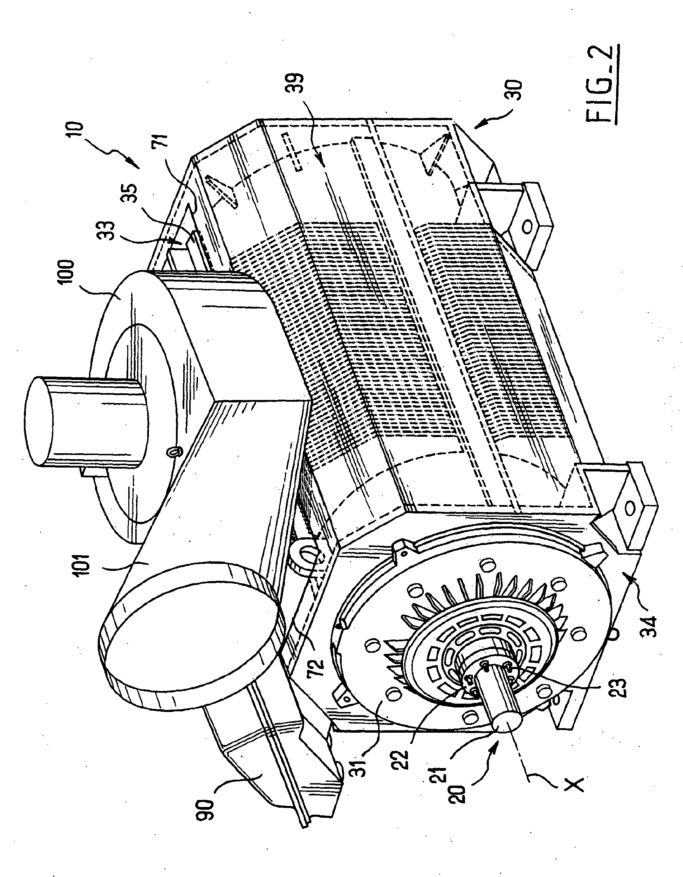

On connaît également par WO 97/40569 divers carters de machines tournantes comportant des ailettes de refroidissement. La figure 1 de WO 97/40569 représente un carter pourvu de nervures parallèles à l'axe de rotation du rotor, la machine étant à ventilation forcée. La figure 2 représente un carter pourvu d'ailettes perpendiculaires à l'axe de rotation, destinées à permettre un refroidissement par convection naturelle.

La demande EP 0 072 999 décrit une machine tournante comportant des ailettes s'étendant parallèlement à l'axe de rotation, à l'intérieur d'un carter.

D'autres machines électriques refroidies par air sont connues de WO 90/13936.

La figure 1 du dessin annexé représente en perspective, de manière schématique, une autre machine connue 1, comportant un stator 2 comprenant un carter 3 réalisé en fonte avec des ailettes 7 s'étendant parallèlement à l'axe de rotation X du rotor 4. Le carter 3 est recouvert par un capot 5 permettant de canaliser l'air entre les ailettes 7. Un ventilateur 6 (seul le carter de celui-ci étant apparent) est fixé sur le capot 5, du côté supérieur et à une extrémité de la machine, l'air étant aspiré par l'autre extrémité de celle-ci. Le stator 2 comporte, outre le carter 3, un circuit magnétique non apparent comportant un empilage de tôles comprenant des encoches dans lesquelles sont engagées les bobines du stator.

Il existe un besoin pour améliorer une telle machine et notamment diminuer son coût de fabrication et/ou accroître ses performances.

L'invention a pour objet, selon l'un de ses aspects, une machine électrique à ventilation forcée comportant :
- un rotor pouvant tourner autour d'un axe de rotation,
- un stator à l'intérieur duquel le rotor peut tourner, ce stator comprenant un empilage de tôles présentant des encoches logeant des bobinages,
- un ventilateur, notamment un ventilateur pouvant tourner indépendamment du rotor,
cette machine pouvant se caractériser par le fait que les tôles sont configurées pour former des canaux de refroidissement dans lesquels un courant d'air de refroidissement généré par le ventilateur peut circuler et par le fait que l'empilage est disposé entre deux entretoises reliées par des barres.

Le fait de réaliser les canaux de refroidissement avec l'empilage de tôles peut permettre d'éviter la fabrication d'un carter par fonderie, d'avoir à usiner celui-ci et d'avoir à fixer l'empilage de tôles à l'intérieur.

L'absence de carter permet encore d'améliorer l'évacuation de la chaleur par conduction en supprimant la résistance thermique formée entre le circuit magnétique et le carter dans les machines connues.

L'empilage de tôles peut être configuré pour former des ailettes s'étendant sensiblement perpendiculairement à l'axe de rotation du rotor. Cette disposition des ailettes peut permettre de refroidir efficacement la machine. De plus, les ailettes peuvent être réalisées beaucoup plus proches les unes des autres que par fonderie. Un grand nombre d'ailettes, par exemple une cinquantaine, peut ainsi être réalisé avec l'empilage de tôles. Chaque ailette peut être formée par exemple par un paquet de tôles comportant entre deux et douze tôles, notamment entre cinq et neuf tôles, par exemple sept tôles. Enfin les ailettes, lorsque réalisées avec une tôle magnétique, peuvent permettre d'améliorer la circulation du flux magnétique.

Le ventilateur peut être supporté par la machine, par exemple sensiblement à mi-longueur de celle-ci. Cette dernière peut comporter un capot recouvrant au moins partiellement des ailettes, les canaux de refroidissement étant formés entre ces ailettes, le capot permettant de canaliser l'air entre les ailettes. Le capot peut être fixé sur les entretoises, par exemple.

La machine peut comporter deux cloisons sensiblement perpendiculaires à l'axe de rotation, disposées sous le capot, faisant par exemple partie intégrante de celui-ci. Ce dernier peut comporter deux entrées d'air à l'extérieur des cloisons et une sortie d'air entre les deux cloisons, les deux entrées et la sortie pouvant être situées du côté supérieur de la machine, les cloisons étant configurées pour obliger l'air à circuler depuis les entrées vers la sortie au travers de passages situés du côté inférieur de la machine.

L'empilage de tôles peut comporter une alternance de paquets de tôles, les tôles de chaque paquet ayant toutes une forme identique, les tôles de deux paquets consécutifs ayant des formes différentes. L'un des paquets peut ainsi comporter des tôles dont le contour extérieur est sensiblement circulaire tandis que le paquet adjacent peut comporter des tôles comportant des extensions additionnelles destinées à former les ailettes.

Les entretoises peuvent supporter des paliers sur lesquels repose l'arbre du rotor.

Les barres peuvent être fixées aux entretoises, par exemple soudées, de manière à maintenir l'empilage en compression axiale.

Les entretoises peuvent comporter un corps généralement tubulaire dont une extrémité est adjacente à l'une des extrémités de l'empilage et l'autre extrémité est adjacente à un flasque soudé sur ce corps, ce flasque servant à la fixation du palier correspondant. Les entretoises peuvent comporter des pieds permettant la fixation de la machine.

Les bobines du stator peuvent comporter des têtes formées par les faisceaux de fils qui quittent une encoche pour s'engager dans une autre. Ces têtes de bobines peuvent présenter une forme générale triangulaire, ce qui permet de relier les entretoises par des barres rectilignes, parallèles à l'axe de rotation du rotor, fixées sur la surface extérieure des corps des entretoises. La forme généralement triangulaire des têtes de bobines permet de les ranger à l'intérieur du corps d'une entretoise avec un encombrement radial suffisamment faible pour que le rotor puisse être introduit aisément dans le stator, ce qui dispense d'avoir à exercer sur les têtes de bobines une action mécanique de compression susceptible d'endommager l'isolant électrique des fils.

L'invention convient tout particulièrement à la réalisation de machines électriques de puissance supérieure ou égale à 500 kW, et notamment à la réalisation de génératrices pour éoliennes de 850 kW ou plus.

L'invention a encore pour objet une éolienne équipée d'une machine telle que définie ci-dessus.

L'invention pourra être mieux comprise à la lecture de la description détaillée qui va suivre, d'exemples de mise en oeuvre non limitatifs, et à l'examen du dessin annexé, sur lequel :
- la figure 1, précédemment décrite, représente en perspective et de manière schématique une machine connue,
- la figure 2 représente de manière schématique et en perspective une machine mettant en oeuvre au moins certains aspects de l'invention,
- la figure 3 représente de manière schématique, en perspective, l'empilage de tôles, les entretoises et les barres reliant ces dernières,
- la figure 4 représente en vue de côté, partiellement, l'empilage de tôles,
- la figure 5 représente en vue de face une tôle statorique,
- la figure 6 représente en perspective la partie supérieure du capot de la machine de la figure 2,
- la figure 7 est une vue de face selon VII de la figure 6,
- la figure 8 représente en perspective la partie inférieure du capot de la machine,
- la figure 9 est une vue de face selon IX de la figure 8,
- la figure 10 illustre de manière schématique la disposition des têtes de bobines,
- la figure 11 illustre de manière très schématique la forme générale et la disposition des têtes de bobines selon l'art antérieur,
- la figure 12 illustre de manière très schématique la forme générale triangulaire des têtes de bobines selon un aspect de l'invention, et
- la figure 13 représente en vue de face, partiellement, un empilage de tôles statoriques selon une variante de mise en oeuvre de l'invention.

La machine 10 représentée à la figure 2 comporte un rotor 20 tournant à l'intérieur d'un stator 30 selon un axe de rotation X.

Cette machine est destinée par exemple à équiper la nacelle d'une éolienne du type V52-850 kW, commercialisée par la société danoise VESTAS.

Le rotor 20 est bobiné et son arbre 21 comporte, du côté avant de la machine, une bague isolante 22 supportant des connecteurs 23 pour l'alimentation électrique des enroulements.

L'arbre 21 est supporté par des roulements fixés sur des paliers 31 du stator 30, seul un de ces paliers étant apparent sur la figure 2.

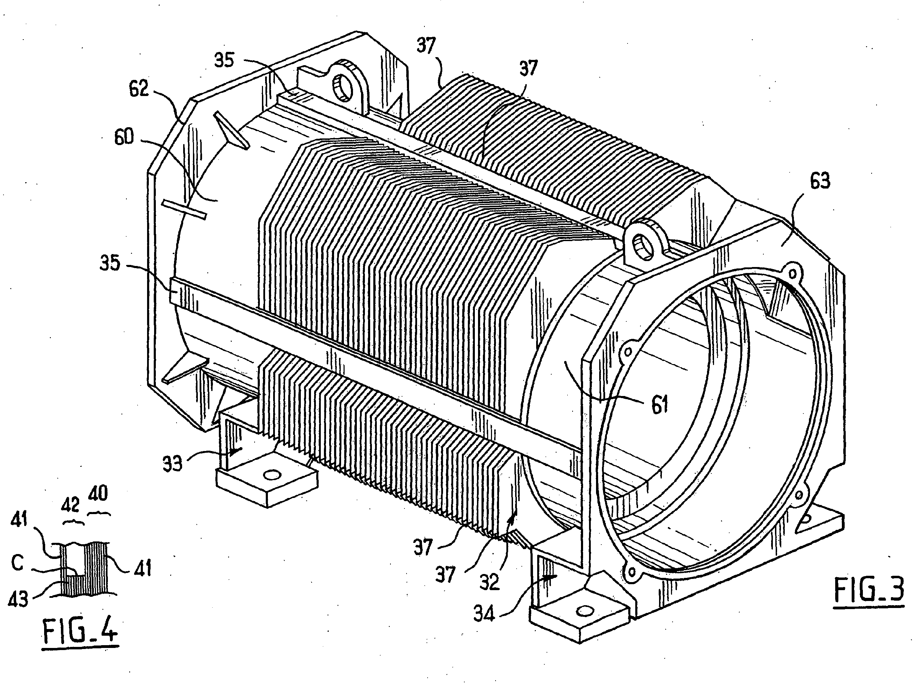

Le stator 30 comporte, comme on peut le voir plus particulièrement sur la figure 3, un empilage 32 de tôles statoriques disposé entre deux entretoises 33 et 34 reliées par quatre barres 35.

L'empilage 32 comporte une succession de paquets 40, par exemple une cinquantaine, formés chacun par plusieurs tôles d'acier magnétique 41 identiques accolées, alternant avec des paquets 42 formés chacun par plusieurs tôles d'acier magnétique 43 identiques accolées. Les tôles statoriques 41 et 43 présentent des formes différentes, de sorte que les paquets 40 séparés par les paquets 42 forment des ailettes de refroidissement 37.

Dans l'exemple considéré, chaque paquet 40 ou 42 comporte sept tôles 41, respectivement 43, identiques, comme on peut le voir sur la figure 4.

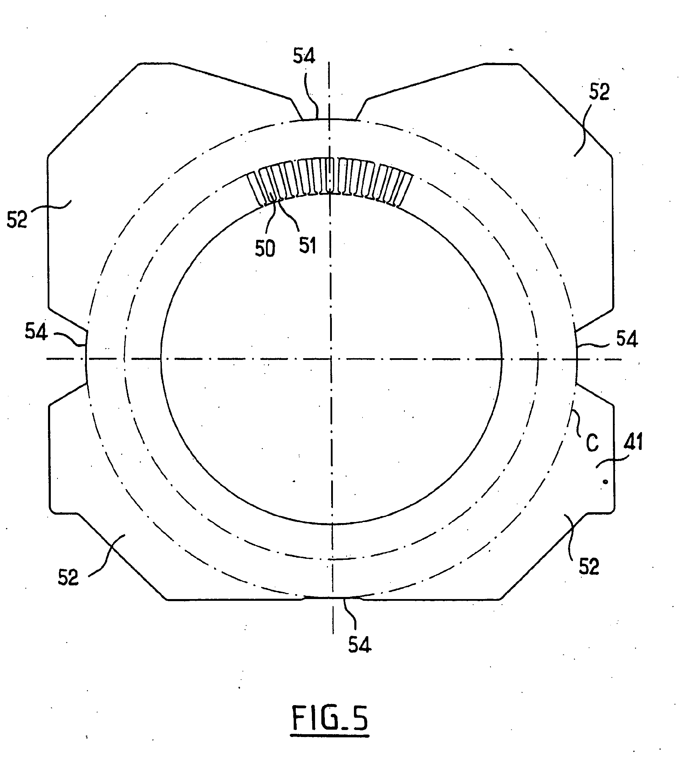

On a représenté sur la figure 5 une tôle 41. Celle-ci est réalisée par découpage et comporte, sur son côté radialement intérieur, des encoches 50, par exemple au nombre de quatre-vingt seize, formées entre des dents 51. Les encoches 50, qui présentent dans l'exemple illustré des épanouissements polaires, sont configurées pour recevoir les fils des bobines du stator 30, lesquels sont par exemple de section circulaire.

On a représenté par un trait interrompu C le contour général des tôles 43. On peut remarquer que la tôle 41 comporte quatre extensions 52 du côté opposé aux encoches 50 et destinées à former les ailettes 37. Des gorges 54 sont formées entre les extensions 52 pour le passage des barres 35 reliant les entretoises 33 et 34, ces barres 35 étant chacune rectiligne d'axe longitudinal parallèle à l'axe de rotation X.

Le fond des gorges 54 est aligné, lorsque l'on observe l'empilage 32 suivant l'axe de rotation X, avec le contour C des tôles 43.

On pourra également remarquer à l'examen de la figure 3 que les entretoises 33 et 34 comportent des corps respectifs 60 et 61, chacun de forme générale cylindrique, sur lesquels sont fixées des flasques respectifs 62 et 63 de support des paliers 31.

Les corps 60 et 61 présentent une surface extérieure cylindrique alignée avec le fond des gorges 54, ce qui permet de fixer aisément les barres 35 par exemple par soudure.

En revenant à la figure 2, on voit que le stator 30 comporte un capot 39 venant recouvrir l'empilage 32 et les corps 60 et 61 des entretoises. Ce capot 39 se fixe, dans l'exemple illustré, sur la tranche des flasques 62 et 63.

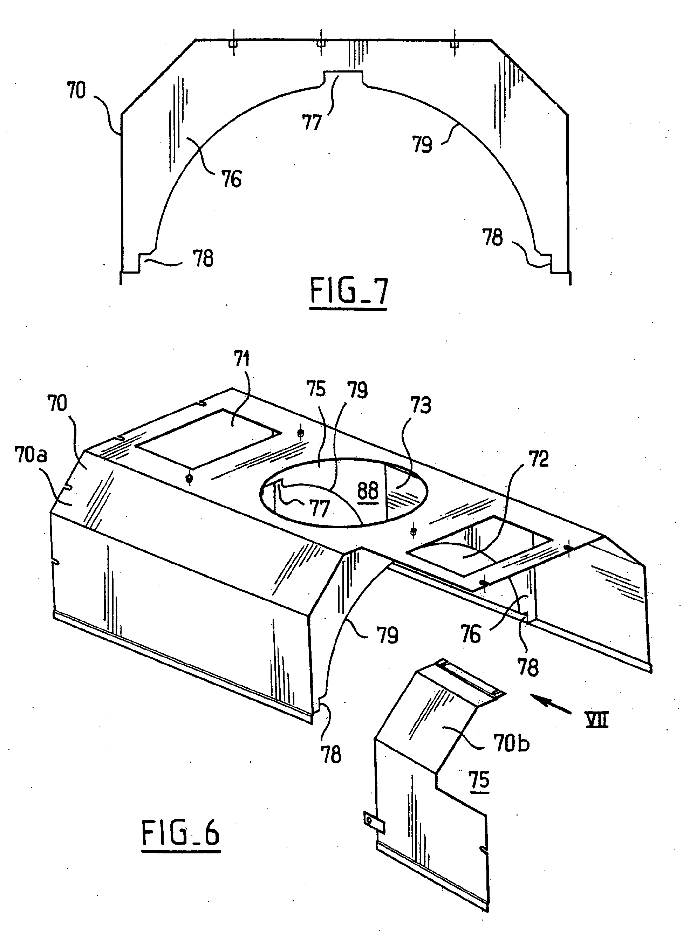

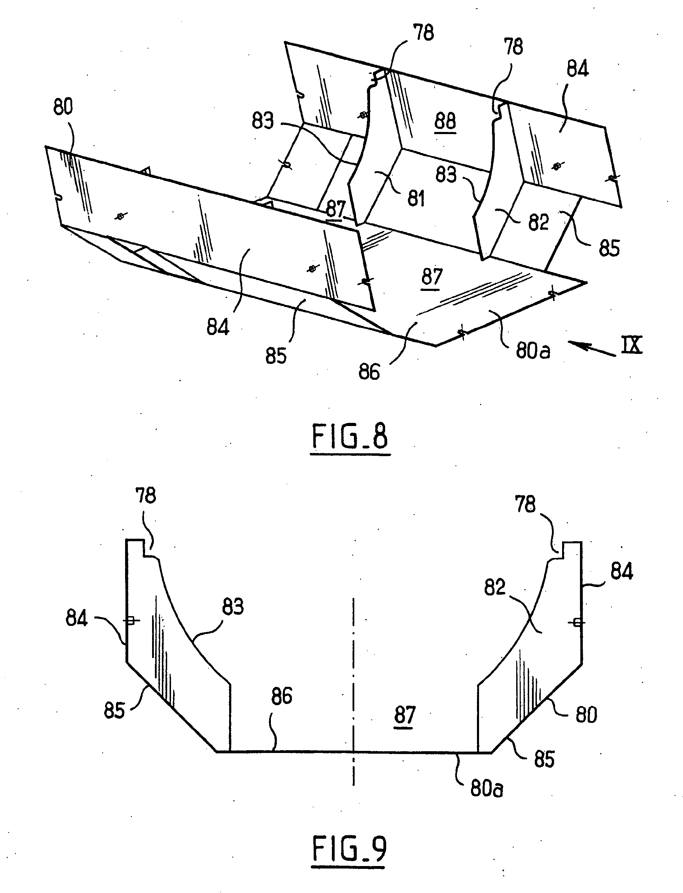

Le capot 39 comporte une partie supérieure 70, représentée isolément sur les figures 6 et 7, et une partie inférieure 80 représentée isolément sur les figures 8 et 9.

La partie supérieure 70 comporte une tôle 70a métallique et un élément amovible 70b présentant une ouverture 75 pour la fixation d'une boîte de connexion 90. La tôle 70a est traversée par deux ouïes 71 et 72 servant d'entrée d'air de refroidissement, comme cela sera expliqué plus loin, et par une ouïe centrale 73 située entre les ouïes 71 et 72, destinée à permettre la sortie de l'air chaud à évacuer.

La partie supérieure 70 comporte également des cloisons parallèles 75 et 76, perpendiculaires à l'axe X et présentant un bord libre 79 généralement demi-circulaire destiné à venir en appui contre un paquet 42 de tôles 43.

Le bord libre 79 comprend des encoches 77 pour le passage de la barre 35 supérieure et des demi-encoches 78 pour le passage des barres 35 latérales.

La partie inférieure 80 comporte une tôle 80a ayant des pans verticaux 84 et des pans obliques 85 reliés par un fond 86.

Des cloisons parallèles 81 et 82, perpendiculaires à l'axe X, sont fixées sur la tôle 80a et présentent un bord libre 83 destiné à venir en appui contre un paquet 42 de tôles 43 dans le prolongement des cloisons 75 et 76 et des demi-encoches 78 pour le passage des barres latérales 35.

Les cloisons 81 et 82 s'étendent le long des pans verticaux 84 et obliques 85 mais ne s'étendent pratiquement pas sur le fond 86, ce qui crée des ouvertures 87.

La réunion des cloisons 75, 81 d'une part et 76, 82 d'autre part, forme un compartiment 88 dans lequel débouche l'ouie 73.

L'air de refroidissement est mis en mouvement au moyen d'un ventilateur 100 dont seul le carter est apparent, fixé sur la partie supérieure 70 du capot 39 sensiblement à mi-longueur de la machine et relié à un conduit 101 permettant de rejeter l'air à évacuer du côté avant de la machine 10.

L'air de refroidissement entrant par les ouïes 71 et 72 circule verticalement le long des ailettes 37 à l'extérieur du compartiment 88 jusqu'au fond 86, traverse horizontalement les passages 87 puis remonte par le compartiment 88 pour traverser l'ouïe 73.

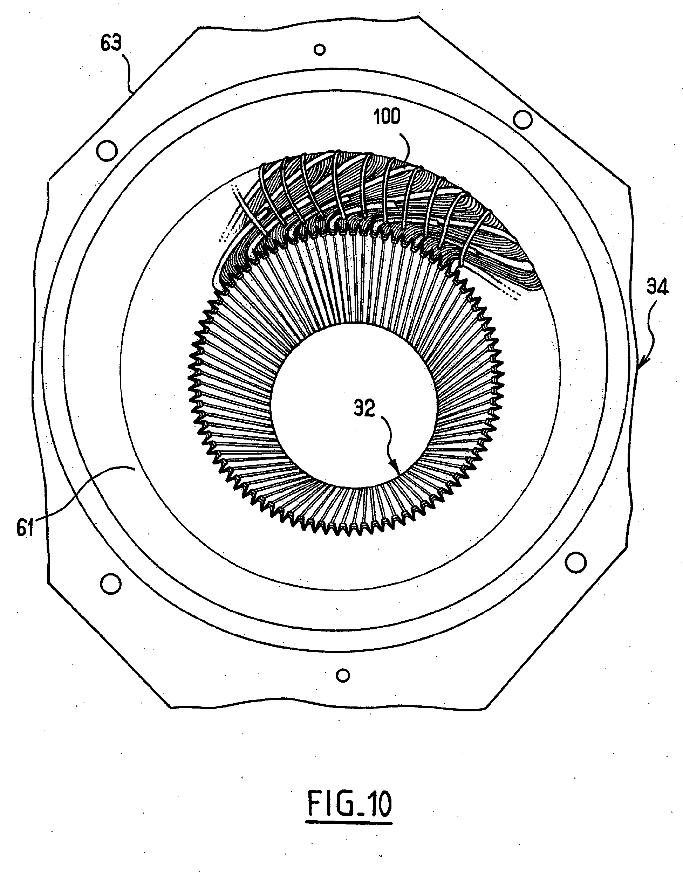

Les têtes 160 des bobines du stator présentent une forme générale triangulaire, ce qui permet de les disposer comme illustré à la figure 10 à l'intérieur des corps 60 et 61 des entretoises 33 et 34, de manière à ne pas gêner la mise en place du rotor.

Pour permettre de mieux faire comprendre ce qu'on entend par tête de bobine de forme générale triangulaire, on a représenté à la figure 11 en vue développée la forme générale aplatie des têtes de bobines des machines connues, dont l'inconvénient est de rendre difficile le rangement des fils dans un espace annulaire d'épaisseur réduite, sauf à les tasser en exerçant une action mécanique susceptible d'endommager leur isolant.

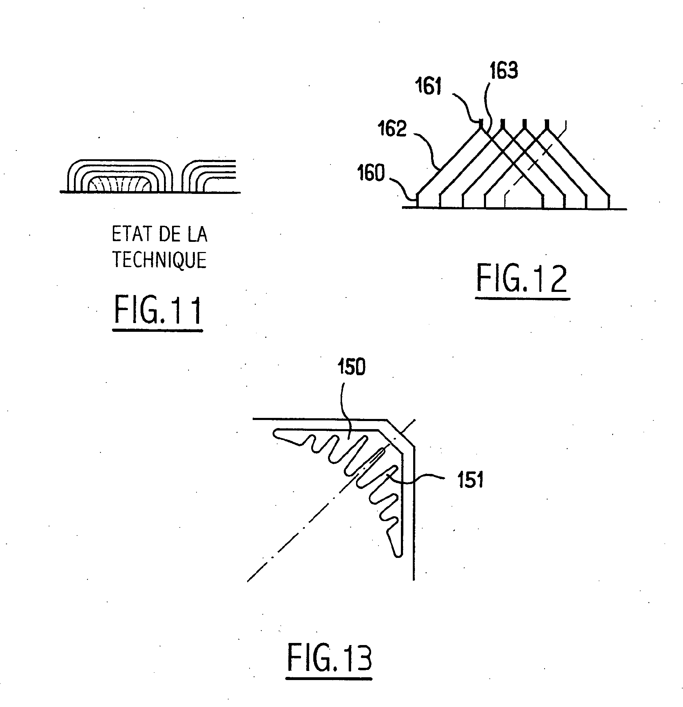

La figure 12 illustre de manière très schématique la forme générale triangulaire des têtes de bobines selon un aspect de l'invention. On voit que chaque tête de bobine 160 présente des portions 162 et 163 qui s'étendent obliquement sur une distance relativement grande en éloignement de l'empilage de tôles et en rapprochement l'une de l'autre. Ces portions 162 et 163 se rejoignent à une extrémité 161, conférant à la tête 160, lorsqu'elle est observée selon une direction radiale, une forme générale triangulaire.

Bien entendu, l'invention n'est pas limitée à l'exemple qui vient d'être décrit et l'on peut notamment réaliser l'empilage avec des canaux intérieurs, comme on va maintenant le décrire en référence à la figure 13.

On a représenté sur cette figure un empilage de tôles statoriques qui comporte au moins un canal intérieur 150 réalisé par découpage des tôles constitutives de l'empilage.

Ce canal 150 peut s'étendre parallèlement à l'axe de rotation X et permettre un refroidissement du stator au moyen d'un courant d'air de refroidissement axial.

La forme des tôles peut permettre d'éviter de rapporter un capot sur l'empilage.

Des ailettes 151 peuvent être réalisées par découpe des tôles dans le canal intérieur 150, afin d'accroître les échanges thermiques.

Dans toute la description, y compris les revendications, l'expression « comportant un » doit être comprise comme étant synonyme de « comportant au moins un », sauf si le contraire est spécifié.

## Revendications

1. Machine électrique (10) à ventilation forcée, comportant :
- un rotor (20) pouvant tourner autour d'un axe de rotation (X),
- un stator (30) à l'intérieur duquel le rotor peut tourner, ce stator comprenant un empilage (32) de tôles (41 ; 43) présentant des encoches (50) logeant des bobinages,
- un ventilateur (100), notamment un ventilateur pouvant tourner indépendamment du rotor,
les tôles étant configurées pour former des canaux de refroidissement dans lesquels un courant d'air de refroidissement généré par le ventilateur peut circuler, et l'empilage (32) étant disposé entre deux entretoises (33, 34) reliées par des barres (35), les tôles comportant des gorges (54) pour le passage des barres, et
- un capot fixé sur les entretoises,
les entretoises comportant un corps (60, 61) généralement tubulaire dont une extrémité est adjacente à l'une des extrémités de l'empilage et l'autre extrémité est adjacente à un flasque soudé sur ce corps.

2. Machine électrique selon la revendication 1, **caractérisée par le fait que** le ventilateur (100) est supporté par la machine.

3. Machine électrique selon l'une des revendications 1 et 2, **caractérisée par le fait que** les canaux de refroidissement sont formés entre des ailettes (37) et **par le fait qu'**elle comporte un capot (39) recouvrant au moins partiellement les ailettes (37).

4. Machine électrique selon la revendication 3, **caractérisée par le fait qu'**elle comporte deux cloisons (75 ; 81 ; 76 ; 82) sensiblement perpendiculaires à l'axe de rotation et disposées sous le capot (39).

5. Machine électrique selon la revendication 4, **caractérisée par le fait que** le capot comporte deux entrées d'air (71, 72) à l'extérieur des cloisons et une sortie d'air (73) entre les deux cloisons, les deux entrées et la sortie étant situées du côté supérieur de la machine, les cloisons (75 ; 81 ; 76 ; 82) étant configurées pour obliger l'air à circuler depuis les entrées (71, 72) vers la sortie (73) au travers de passages (87) situés du côté inférieur de la machine.

6. Machine selon l'une quelconque des revendications 3 à 5, **caractérisée par le fait que** les ailettes (37) s'étendent sensiblement perpendiculairement à l'axe de rotation du rotor.

7. Machine électrique selon l'une quelconque des revendications 3 à 6, **caractérisée par le fait que** chaque ailette (37) est formée par un paquet (40 ; 42) de tôles comportant entre deux et douze tôles, notamment entre cinq et neuf tôles, par exemple sept tôles.

8. Machine électrique selon l'une quelconque des revendications précédentes, **caractérisée par le fait que** l'empilage de tôles comporte une alternance de paquets (40 ; 42) de tôles, chaque paquet ayant des tôles de forme identique, les tôles de deux paquets (40 ; 42) consécutifs ayant des formes différentes.

9. Machine électrique selon la revendication 8, **caractérisée par le fait que** l'un des paquets (42) comporte des tôles dont le contour extérieur (C) est sensiblement circulaire tandis que le paquet adjacent (40) comporte des tôles comportant des extensions additionnelles (52) destinées à former des ailettes (37).

10. Machine électrique selon l'une quelconque des revendications précédentes, **caractérisée par le fait que** les barres (35) sont soudées aux entretoises.

11. Machine électrique selon l'une quelconque des revendications précédentes, **caractérisée par le fait que** le flasque (62, 63) sert à la fixation d'un palier correspondant (31).

12. Machine selon l'une quelconque des revendications précédentes, **caractérisée par le fait que** l'empilage comporte au moins un canal intérieur (150).

13. Machine selon la revendication 12, **caractérisée par le fait que** l'empilage comporte des ailettes (151) formées par découpe dans le ou les canaux intérieurs (150).

14. Machine selon l'une quelconque des revendications précédentes, **caractérisée par le fait que** le stator comporte des têtes de bobines (160) de forme générale triangulaire.

## Claims

1. An electric machine (10) with forced ventilation, the machine comprising:
. a rotor (20) capable of rotating about an axis of rotation (X) ;
. a stator (30) within which the rotor can rotate, said stator comprising a stack (32) of laminations (41; 43) presenting slots (50) housing windings; and
. a fan (100), in particular a fan that is capable of rotating independently of the rotor;
the laminations being configured to form cooling channels in which a stream of cooling air generated by the fan can flow, and the stack (32) being disposed between two spacers (33, 34) interconnected by bars (35), the laminations comprising grooves for the bars, and
. a carter fixed on said spacers, the spacers comprising a generally tubular body (60, 61) having one end adjacent to one of the ends of the stack and an opposite end adjacent to a flange welded to the body.

2. An electric machine according to claim 1, **characterized by** the fact that the fan (100) is supported by the machine.

3. An electric machine according to claim 1 or claim 2, **characterized by** the fact that the cooling channels are formed between fins (37), and by the fact that the machine includes a cover (39) covering the fins (37), at least in part.

4. An electric machine according to claim 3, **characterized by** the fact that it has two partitions (75; 81; 76; 82) extending substantially perpendicularly to the axis of rotation and placed inside the cover (39).

5. An electric machine according to claim 4, **characterized by** the fact that the cover has two air inlets (71, 72) outside the partitions and an air outlet (73) between the two partitions, the inlets and the outlet being situated on the top of the machine, the partitions (75; 81; 76; 82) being configured in such a manner as to constrain the air to flow from the inlets (71, 72) towards the outlet (73) via passages (87) situated under the machine.

6. A machine according to any one of claims 3 to 5, **characterized by** the fact that the fins (37) extend substantially perpendicularly to the axis of rotation of the rotor.

7. An electric machine according to any one of claims 3 to 6, **characterized by** the fact that each fin (37) is formed by a packet (40; 42) of laminations comprising two to twelve laminations, in particular five to nine laminations, for example seven laminations.

8. An electric machine according to any preceding claim, **characterized by** the fact that the stack of laminations comprises alternating packets (40; 42) of laminations, each packet being made up of laminations that are identical in shape, with laminations of two consecutive packets (40; 42) being of different shapes.

9. An electric machine according to claim 8, **characterized by** the fact that one of the packets (42) comprises laminations having an outline (C) that is substantially circular, while the adjacent packet (40) comprises laminations having additional extensions (52) for forming fins (37).

10. An electric machine according to any preceding claim, **characterized by** the fact that the bars (35) are welded to the spacers.

11. An electric machine according to any preceding claim, **characterized by** the fact that, the flange (62, 63) serves to fix a corresponding endplate (31).

12. A machine according to any preceding claim, **characterized by** the fact that the stack includes at least one internal channel (150).

13. A machine according to claim 12, **characterized by** the fact that the stack includes fins (151) formed by cutting out within the internal channel(s) (150).

14. A machine according to any preceding claim, **characterized by** the fact that the stator has winding heads (160) that are generally triangular in shape.

## Patentansprüche

1. Elektrische Maschine (10) mit Zwangsbelüftung, mit:
einem um eine Drehachse (X) drehbaren Rotor (20),
einem Stator (30), in dessen Inneren der Rotor drehbar ist und der einen Stapel (32) aus Blechen (41; 43) mit Nuten (50) zur Aufnahme von Wicklungen aufweist,
einem Lüfter (100), insbesondere einem unabhängig vom Rotor drehbaren Lüfter,
wobei die Bleche so gestaltet sind, dass sie Kühlkanäle für die Strömung von durch den Lüfter erzeugter Kühlluft bilden und der Stapel (32) zwischen zwei an Stangen (35) befestigten Rahmenträgern (33, 34) angeordnet ist, wobei die Bleche Ausnehmungen (54) zur Durchführung der Stangen aufweisen, und
einer an den Rahmenträgern befestigten Abdeckung,
wobei die Querstege einen generell rohrförmigen Hauptteil (60, 61) aufweisen, dessen eines Ende einem Ende des Stapels und dessen anderes Ende einem an den Hauptteil angeschweißten Flansch benachbart ist.

2. Elektrische Maschine nach Anspruch 1, **dadurch gekennzeichnet, dass** der Lüfter (100) an der Maschine angebracht ist.

3. Elektrische Maschine nach Anspruch 1 oder 2, **dadurch gekennzeichnet, dass** die Kühlkanäle zwischen Rippen (37) ausgebildet sind und eine die Rippen (37) mindestens teilweise verdeckende Abdeckung (39) vorhanden ist.

4. Elektrische Maschine nach Anspruch 3, **gekennzeichnet durch** zwei unter der Abdeckung (39) angeordnete, zur Drehachse im wesentlichen senkrechte Trennwände (75; 81; 76; 82).

5. Elektrische Maschine nach Anspruch 4, **dadurch gekennzeichnet, dass** die Abdeckung außerhalb der Trennwände zwei Lufteinlässe (71, 72) und zwischen ihnen einen Lufteinlass (73) aufweist, wobei die beiden Einlässe und der Auslass an der Oberseite der Maschine angeordnet und die Trennwände (75; 81; 76; 82) so gestaltet sind, dass sie eine Luftströmung von den Einlässen (71, 72) durch im Innern der Maschine vorhandene Durchführungen (87) zu dem Auslass (73) erzwingen.

6. Maschine nach einem der Ansprüche 3 bis 5, **dadurch gekennzeichnet, dass** die Rippen (37) im wesentlichen senkrecht zur Drehachse des Rotors verlaufen.

7. Elektrische Maschine nach einem der Ansprüche 3 bis 6, **dadurch gekennzeichnet, dass** jede Rippe (37) von einem Blechpaket (40; 42) gebildet ist, das zwei bis zwölf, insbesondere fünf bis neun, beispielsweise sieben, Bleche umfasst

8. Elektrische Maschine nach einem der vorhergehenden Ansprüche, **dadurch gekennzeichnet, dass** der Blechstapel abwechselnd Blechpakete (40; 42) aus jeweils gleich geformten Blechen aufweist, wobei die Bleche zweier aufeinander folgender Pakete (40; 42) unterschiedlich geformt sind.

9. Elektrische Maschine nach Anspruch 8, **dadurch gekennzeichnet, dass** eines der Pakete (42) Bleche mit im wesentlichen kreisrunder äußerer Kontur (C) und das benachbarte Paket (40) Bleche mit Ansätzen (52) zur Bildung von Rippen (37) aufweist.

10. Elektrische Maschine nach einem der vorhergehenden Ansprüche, **dadurch gekennzeichnet, dass** die Stangen (35) an den Rahmenträgern angeschweißt sind.

11. Elektrische Maschine nach einem der vorhergehenden Ansprüche, **dadurch gekennzeichnet, dass** der Flansch (62, 63) zur Befestigung eines entsprechenden Lagers (31) dient.

12. Maschine nach einem der vorhergehenden Ansprüche, **dadurch gekennzeichnet, dass** der Stapel mindestens einen inneren Kanal (150) aufweist.

13. Maschine nach Anspruch 12, **dadurch gekennzeichnet, dass** der Stapel durch Schnitte in dem oder den inneren Kanälen (150) erzeugte Rippen (151) aufweist.

14. Maschine nach einem der vorhergehenden Ansprüche, **dadurch gekennzeichnet, dass** der Stator generell dreieckige Wicklungsköpfe (160) aufweist.
